# EUROPEAN PATENT APPLICATION

(11) **EP 1 308 861 A2**
(43) Date of publication of application: **07.05.2003**
(21) Application number: 03002842.7
(22) Date of filing: 21.08.1998
(51) Int. Cl.: G06F 17/30

(54) **Image processing apparatus displaying a catalog of different types of data in a different manner**

(30) Priority: 25.08.1997 JP 22785897; 05.09.1997 JP 24060897
(62) Divisional of application: 98115837.1
(71) Applicant: SHARP KABUSHIKI KAISHA, Osaka-shi, Osaka-fu 545-0013 (JP)
(72) Inventor: Yanagi, Akio, Nara-shi, Nara (JP); Kamiya, Shin, Nara-shi, Nara (JP)
(74) Representative: Müller - Hoffmann & Partner

(57) **Abstract**

An image processing apparatus provides a catalogue display of a plurality of data items including a motion picture data item and a still picture data item. The image processing apparatus includes a display device and an arrangement device for generating a catalog in which are arranged for each category a mixture of the motion picture data item and still picture data item. A plurality of motion picture data items and still picture items are displayed on a divided display screen of said display device which is altered in different manners according to a specified type of motion or still image for displaying the respective catalog on the display device.

## Description

### BACKGROUND OF THE INVENTION

### Field of the Invention

The present invention relates to an apparatus. to display and search for data representative of an electronic image. More particularly, the present invention relates to an image processing apparatus that discriminate different types of data such as a still picture and a motion picture recorded on a recording medium to provide a catalog display, whereby data can be easily retrieved or displayed.

### Description of the Background Art

In these few years, many digital images are used such as in electronic publishing, home page authoring on the Internet, and in the arrangement of pictures and videos (movies) at home. The need to provide a catalog display of the image data is increasing for the purpose of storing a large amount of digital image data into a recording medium such as a hard disk, a MD (Micro Disk) or a MO (Magneto-Optical Disk), and searching for a desired one out of the image data stored in the medium.

For example, when a great amount of images are captured with a scanner and stored into a recording medium as image data in an electronic filing device, a catalog of image data (reduced image) corresponding to a reduction of the original image data (original image) is displayed at the time of retrieval. The user selects a reduced image corresponding to a desired original image out of the catalog-displayed reduced image using a mouse or the like to obtain the desired image data.

For example, in Japanese Patent Laying-Open No. 9-114843, a screen is divided into a predetermined number (for example 10) of regions to display a catalog of reduced images from which the user can select the desired image data. As to display of a motion picture, Japanese Patent Laying-Open Nos. 8-70430 and 8-335387 disclose the technique of screen-splitting to display a motion picture.

However, in the case where a screen is merely divided to provide a catalog of reduced images as disclosed in Japanese Patent Laying-Open No. 9-114843, the number of images that can be displayed at one time is limited. When the number of still pictures of the original image exceeds a predetermined number, it will be necessary to repeat the operation of displaying reduced images for every predetermined number of pictures and turning the page to the next screen. When a certain image is to be selected from several hundreds of still pictures, the time required until a desired image is displayed increases, which is not practical.

When motion pictures are addressed in an electronic filing device, the number of original images and reduced images will be orders of magnitude greater than that of still pictures since a motion picture is a time series of still pictures. When motion pictures and still pictures are processed by the same device, the time required to obtain a desired still picture or a desired motion picture will increase significantly. Furthermore, the searching will further take a longer time when a desired image is to be retrieved from a motion picture since a plurality of still pictures constitute the motion picture. There is also a problem that it is difficult to display or retrieve motion pictures and still pictures together when they are processed with the same device.

Furthermore, it is generally difficult to deal with data associated with the time axis such as a motion picture and data not associated with the time axis such as a still picture together in a consolidated manner. A data processing apparatus that can deal such data items efficiently and together is desired.

### SUMMARY OF THE INVENTION

In view of the foregoing, an object of the present invention is to provide an image processing apparatus that can select a desired one of a first data item associated with the time axis and a second data item on a recording medium with fewer steps of procedure.

Another object of the present invention is to provide
an image processing apparatus that can select
and display a desired one of motion and still pictures on a recording medium with fewer steps of procedure.

Another object of the present invention is to provide
an image processing apparatus that can easily select and display a desired one out of motion and still pictures on a recording medium with fewer steps of procedure.

Still another object of the present invention is to provide
an image processing apparatus that can easily select and display a desired one out of a plurality of motion pictures and still pictures on a recording medium with fewer steps of procedure.

A still further object of the present invention is to provide
an image processing apparatus that allows a user to discriminate at a glance a motion picture from a still picture on a recording medium, and that can easily select and display a desired image with fewer steps of procedure.

Yet a further object of the present invention is to provide
an image processing apparatus that can easily select and display a desired image with fewer steps of procedure by allowing a motion picture to be discriminated at a glance from a still picture on a recording medium, and determining at a glance the display time of a motion picture.

According to an aspect of the present invention, an image processing apparatus displays image data mixed with a motion picture and a still picture recorded on a recording medium. The image processing apparatus includes a display device, a pointer device for specifying an arbitrary point on a display screen of the display device, and a division display device for displaying a catalog of a plurality of images by dividing the screen of the display device in a first manner; and responsive to specification of any of a displayed motion picture or a still picture by the pointer device to alter the display manner of the divided screen to a second manner according to the type of the specified image for displaying a catalog of a plurality of images.

Preferably, the second manner differs from the first manner in at least one of the divided number of the screen of display device, the size of the divided display region, and the display position of the divided image.

Since the display manner of the divided screen is altered according to the type of the specified image in the image processing apparatus, the type of the specified image can be discriminated at a glance.

Further preferably, the second manner includes a display manner for a motion picture and a display manner for a still picture, selected according to the type of specified image. When a catalog of images is displayed in the display manner for a motion picture, the division display device responds to specification of a divided display region where a still picture is displayed by the pointer device to switch to the display manner for a still picture to provide a catalog of a plurality of images. When a catalog of images is displayed in the display manner for a still picture, the division display device responds to specification by the pointer device of a divided display region where a motion picture is displayed to switch to the display manner for a motion picture to display a catalog of a plurality of images.

Since the divided screen is always displayed in a constant display manner according to the type of the specified image, the type of the specified image can be discriminated at a glance.

The image processing apparatus can further include a motion picture reproduction device to reproduce and display a specified motion picture in response to specification by the pointer device of a divided display region where a motion picture is displayed when the image is catalog-displayed in the display manner for a motion picture. Further preferably, some of the image data has additional information. The division display device can have the display manner of the divided display differed between image data that has additional information and image data that does not have additional information.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram of an image processing apparatus according to an embodiment of the present invention.

Fig. 2 shows the relationship between an original image and a reduced image.

Fig. 3 is a diagram for describing the data structure of a disk according to an embodiment of the present invention.

Fig. 4 shows the details of a time stamp DB file according to a first embodiment of the present invention.

Fig. 5 shows the details of time stamp information according to the first embodiment of the present invention.

Fig. 6 shows an example of a display of a still picture and a motion picture according to a first embodiment of the present invention.

Fig. 7 shows a display coordinate system according to the first embodiment of the present invention.

Fig. 8 is a flow chart for describing an operation of the apparatus of the first embodiment of the present invention related to the display of Fig. 6.

Fig. 9 shows a display example of a viewpoint and frame forwarding according to the first embodiment of the present invention.

Fig. 10 is a flow chart for describing an operation of the apparatus of the first embodiment of the present invention related to the display of Fig. 9.

Figs. 11A-11D show other display examples according to the first embodiment of the present invention.

Fig. 12 shows an example of operation of various division displays according to a second embodiment of the present invention.

Fig. 13 shows the correspondence between time stamp information and a reduced image according to the second embodiment of the present invention.

Fig. 14 is a flow chart of a process for a 16-division display according to the second embodiment of the present invention.

Fig. 15 is a flow chart of a display determination process of a specified reduced image according to the second embodiment of the present invention.

Fig. 16 is a flow chart of a process for a 13-division display according to the second embodiment of the present invention.

Fig. 17 is a flow chart of a process for a 9-division display according to the second embodiment of the present invention.

Fig. 18 shows another display example according to the second embodiment of the present invention.

### DESCRIPTION OF THE PREFERRED EMBODIMENTS

### First Embodiment

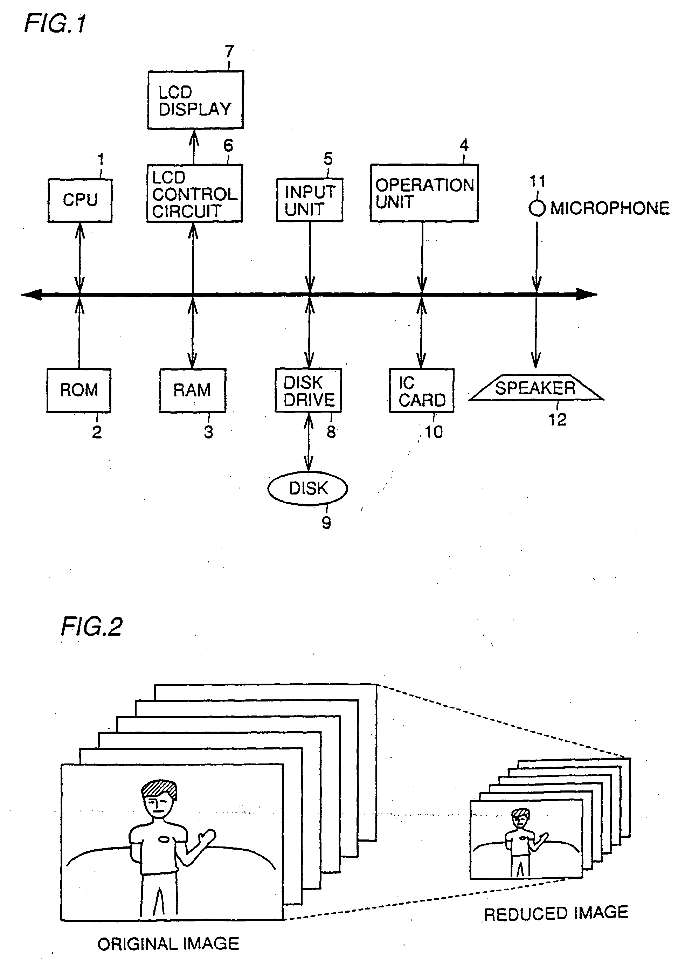

Fig. 1 shows a first embodiment in which the image processing apparatus of the present invention is applied to an electronic camera that can shoot a motion picture and a still picture. Referring to Fig. 1, the image processing apparatus includes a CPU (Central Processing Unit) 1 as control means for providing the entire control of the apparatus, a ROM (Read Only Memory) 2 for storing a program to be executed by CPU 1 for various processing and a dictionary for generating character data, a RAM (Random Access Memory) 3 for temporarily storing programs and data, an operation unit including an operation button, a pen, a mouse, a track pole or a keyboard for operational command and character data input, an input unit 5 with a CCD (Charge-Coupled Device) and a drive circuit thereof for shooting, a LCD (Liquid Display Device) control circuit 6 driven by a display command from CPU 1, a LCD display 7 for displaying a desired screen by LCD control circuit 6, a disk 9 which is a storing medium for storing a still picture or a motion picture shot through input unit 5, and also voice and text data, if necessary, a disk drive 8 for carrying out a reproduction, recording, or erasure process with respect to disk 9, an IC (Integrated Circuit) card 10 which is a recording medium in which data similar to that of disk 9 can be recorded, a microphone 11 for capturing voices at the time of shooting, or independent of shooting, and a speaker 12 for providing reproduced voice from disk 9.

Disk 9 and IC card 10 are recording media for storing data items. Therefore, the embodiment of the present invention will be descizbed hereinafter with disk 9 as an example of the recording medium. The keyboard displayed on the screen of LCD display 7 can be used as operation unit 4. The function particularly required for operation panel 4 is to point out an arbitrary position on LCD display 7. Therefore, a mouse is most preferable for operation unit 4. However, any device that can point out an arbitrary position on a display screen may be used.

The shooting operation is initiated in response to a shooting command through operation unit 4. In the shooting mode, CPU 1 reduces the number of pixels according to a predetermined procedure from the original image captured by input unit 5 to generate a reduced image. The shooting time is added to the reduced image and the original image to be stored in disk 9. A reduced image can be generated by thinning the pixels for ever predetermined number of pixels in the vertical direction and horizontal direction of the image. Alternatively, an image reduced to a predetermined number of pixels can be generated via a certain function. In the present embodiment, input unit 5 can capture a color image. However, the present invention is also applicable to an apparatus that can capture only a black-and-white image. Furthermore, a black-and-white reduced image can be obtained from an input color image.

The present apparatus can shoot and record both a still picture and a motion picture according to a command through operation unit 4. When the original image is a still picture, one reduced picture corresponding to the original image is produced. When the original image is a motion picture, a plurality of reduced images corresponding to respective still pictures are produced since a motion picture is constituted by a time series of still pictures. LCD display 7 is used as a shooting monitor during a shooting operation.

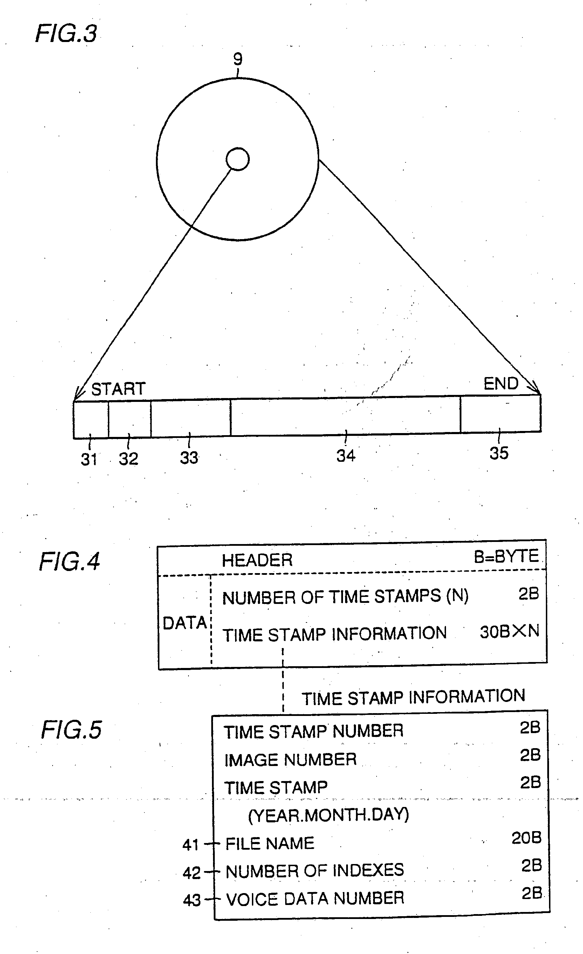

Fig. 3 shows a file structure of disk 9 in which image data is stored. From the innermost to outermost portion of disk 9 are arranged a TOC (Table of Contents) 31 where the position information of each file is recorded together, a time stamp DB (Data Base) file 32 in which an identifier and the like is stored to indicate whether the image is a still picture or a motion picture, a reduced image data file 33 in which a reduced image generated from an original image is recorded, an original image data file 34 in which an original image, whether a still picture or a motion picture, is stored, and a voice data file 35 in which voice data input from microphone' 11 is recorded. The voice data of voice data file 35 is generally additional data applied to the original image. However, only a voice can also be recorded.

Fig. 4 shows a structure of time stamp DB file 32. Time stamp DB file 32 includes a header and data. The data includes the number of time stamps (N) of 2 bytes and N time stamp information of 30 bytes.

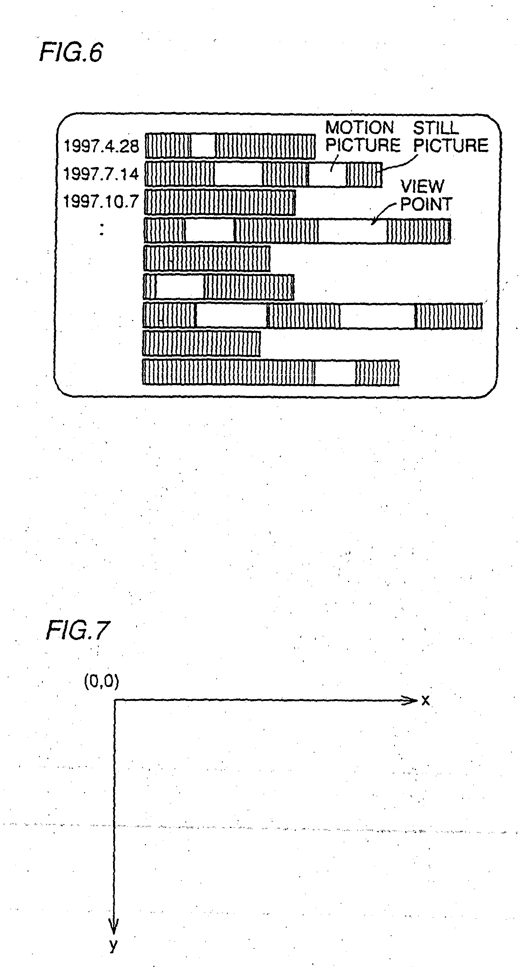

Referring to Fig. 5, each time stamp information includes the time stamp number assigned to each image in the shooting order (2 bytes), the image number indicating the image number for each region (2 bytes), the time stamp indicating the shooting time applied by CPU 1 (2 bytes), a file name 41 input through operation unit 4 and serving as an identifier indicating the presence/absence of character data (text data) applied to a relevant image (20 bytes), the number of indexes 42 serving as an identifier for discriminating whether the image is a still picture or a motion picture (2 bytes), and voice data number 43 which is an identifier indicating the presence/absence of voice data applied to a relevant image. Voice data number 43 is the address of the voice data applied to the original image. "00h" is entered in voice data number 43 when no voice data is applied.

The number of indexes 42 of the present invention is the number of reduced images of a motion picture or a still picture. Therefore, the number of indexes 42 takes a value of 1 for a still picture and a value of 2 or above corresponding to the number of reduced images in time series for a motion picture. Alternatively, the number of original images can be used as the number of indexes 42. However, it is to be noted that TOC 31 on the innermost portion is first accessed by the optical head of disk drive 8 in the reproduction operation of an image. Therefore, when data is stored in disk 9 in the form shown in Fig. 3, a reduced image located in the proximity of TOC 31 is preferable since the data can be accessed faster.

Display of the recorded contents of disk 9 is carried out as set forth in the following. The user provides an image display command to the apparatus through operation unit 4. In response to a display command from operation unit 4, CPU 1 initiates read out from TOC 31 and time stamp DB file 32 of disk 9. Accordingly, an optical head not shown of disk drive 8 accesses TOC 31 and time stamp DB file 32 to read out the number of indexes 42. CPU determines whether the corresponding image is a still picture or a motion picture depending upon whether the value of this number of indexes 42 is 1 or at least 2. Then, a display in the manner shown in Fig. 6 is provided on LCD display 7. The display format shown in Fig. 6 represents the feature of the present embodiment.

Referring to Fig. 6, the display of a motion picture and a still picture is provided in different display manners on the basis of a predetermined shooting time (year, month, and day in the present embodiment) according to the image time stamp. More specifically, one category is created for each predetermined shooting time. Each image is classified according to the time stamp into each category of a shooting time, and symbolized (represented in a graphical form) depending upon a motion picture type or a still picture type to be displayed in a mixed manner in a relevant category. The length of the graphical form corresponding to each image is altered according to the number of indexes 42 of that image, i.e., the number of shot pictures. The category for classification is not limited to the unit of a predetermined shooting time. The category can be classified according to the shooting site, the operator of the camera, the apparatus used for shooting, the object of interest, the source of image data, and the like.

It is not necessary to provide the display length for a motion picture and the display length for a still picture on the same time scale. It is desirable from the point of visuality to compress the time scale of the display of a motion picture than that of a still picture since a motion picture includes many images. The basis of the date of shooting a motion picture is a matter of designing choice, and is not particularly limited. For example, the time of initiating shooting a motion picture, the time terminating the shooting, any time during the shooting operation, or a time from the start to end of the shooting that can be determined according to some rule can be employed. However, it is generally desirable to use the time of initiating a series of shooting. A graphical form having the displayed size (width in the x axis direction in present embodiment) altered according to the number of pictures constituting an image is referred to as "number of pictures representing graphic" hereinafter. This "number of pictures representing graphic" can be regarded as a symbol that indicates the type of the image and the length of the time axis.

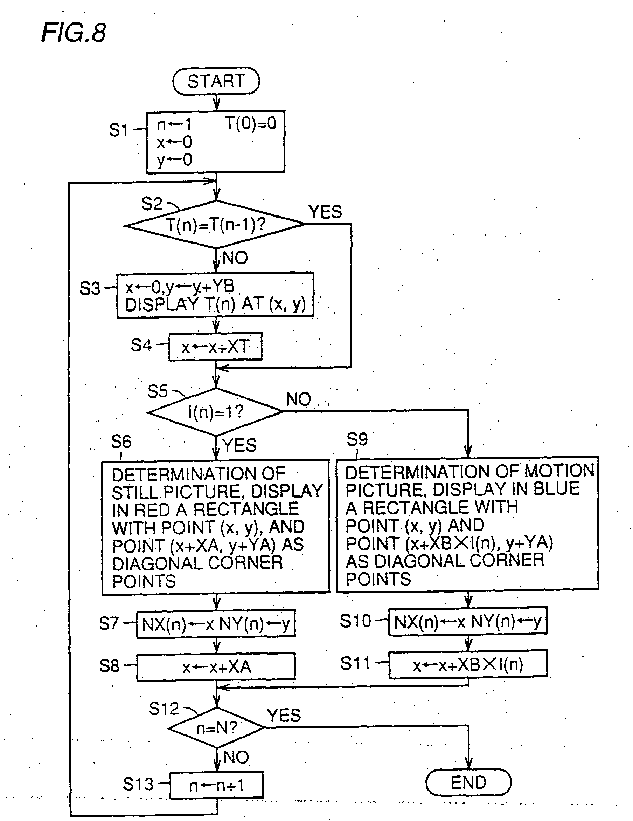

An example of a program executed by CPU 1 to realize the display manner of Fig. 6 will be described hereinafter with reference to the flow chart of Fig. 8. The structure of the following program is only a way of example, and a program having other control structures can be implemented in the present invention.

In the following, the top left point on the screen of LCD display 7 is (x, y) = (0, 0), i.e., the origin, as shown in Fig. 7. The x axis and the y axis are plotted rightwards and downwards, respectively, from the origin.

In the flow chart of Fig. 8, XA, XB, YA, YB, and XT are constants. XA is a constant representing the width of one image in the x axis direction when a still picture is displayed in the form of Fig. 6. XB is a constant representing the width of one image in the x axis direction when a motion picture is displayed in the form of Fig. 6. YA is a constant representing the height of one image in the y axis direction when a still picture is displayed according to the form of Fig. 6. YB is a constant indicating the y coordinate value of the first row in Fig. 6. XT is a constant representing the length in the x axis direction of the time stamp display of Fig. 6.

In the following description, the n-th time stamp is represented as T(n) (n is an integer of 0≦n≦N). "N" is the total number of time stamps within time stamp DB file 32. I(n) indicates the number of indexes of the image corresponding to the n-th time stamp T(n).

At step S1, CPU 1 initializes the time stamp number n (0≦n≦N) which is a variable to 1, the coordinate (x, y) to (0, 0) and T(0) of time stamp T(n) to 0. It is to be noted that "n" has its value altered according to the progress of the process.

At step S2, CPU 1 determines whether time stamp T(n) is equal to time stamp T(n-1). When T(n) = T(n-1), the control jumps to step S5. When T(n) = T(n-1) is not established, the control proceeds to step S3.

At step S3, the contents (year · month · day) of time stamp T(n) is displayed at the coordinate (x, y) = (0, y+YB) on LCD display 7. Since the time stamp is displayed with the length of XT in the x axis direction, CPU 1 updates the value of x to x+XT at step S4.

At step S5, CPU 1 determines whether I(n) indicating the number of indexes 42 is 1 or not. When I(n)=1, control proceeds to step S6 to determine that the image is a still picture. A rectangle with point (x, y) and point (x+XA, y+YA) as the left top corner point and right bottom corner point, respectively, is displayed in red on LCD display 7. At step S7, CPU 1 records that coordinate (x, y) as the x coordinate NX(n) and the y coordinate NY(n) of the n-th "number of pictures representing graphic". As a result of the process of step S6, the X coordinate of the next rectangle display is increased by length XA in the x axis direction of the displayed graphic. Therefore, at step S8, coordinate x is updated to x+XA. Then, the control proceeds to step S12.

When determination is made that the number of indexes I(n) is 2 or more at step S5, control proceeds to step S9. At step S9, CPU 1 determines that the relevant image is a motion picture. A rectangle with point (x, y) and point (x+XB×I(n), y+YA) as the left top corner point and right bottom corner point, respectively, and painted blue, is displayed on LCD display 7. Thus, a still picture can easily be discriminated from a motion picture by displaying a still picture in red and a motion picture in blue. It is to be understood that the still picture and motion picture displayed in red and blue are not limited to these colors, and may be displayed in other different colors. Furthermore, discrimination between a still picture and a motion picture can be made by a feature other than the color.

At step S10, CPU 1 records the relevant coordinate (x, y) as the x coordinate NX(n) and the y coordinate NY(n) of the n-th "number of pictures representing graphic". Since the X coordinate increases by the length of the displayed graphic, coordinate x is updated to x+XB×I(n) at step S11. Then, control proceeds to step S12.

At step S12, CPU 1 compares the time stamp number n with the total number of time stamps N. When these values differ, control proceeds to step S13 where CPU 1 adds 1 to the value of n. Then, control returns to step S2 to repeat the above-described process. When time stamp number n is equal to the total number of stamps N, the process ends. Although all the images corresponding to the total number of stamps N are displayed to be identified at a glance in the present embodiment, only a portion of the images may be displayed instead.

In the present embodiment, a catalog of images is output on LCD display 7 according to a display command through operation unit 4. The present invention is not limited to this embodiment. For example, CPU 1 can detect loading of disk 9 into disk drive 8 to provide a catalog of the images stored in disk 9 onto LCD display 7 in the above-described display manner in response to the load of disk 9. This is desirable from the stand point of convenience since the contents of disk 9 can be automatically and immediately identified upon loading disk 9.

In order to discriminate a motion picture from a still picture in the present embodiment, a motion picture is displayed as a series of images by one rectangle graphical form whereas a still picture is displayed as a rectangle graphical form for each image in a different color. The character of the display manner for discrimination of a motion picture and a still picture is not limited particularly to the color. Various graphical shapes (circle, triangular, and the like), the line type of the contour of the graphic (thickness, dotted line, solid line), the size of the graphic, the pattern (halftone, shaded, wave, and the like in the region of the graphic) can be employed as other embodiments.

The operation of searching for an image in the display form of Fig. 6 will be described hereinafter. At the time of retrieval, the user specifies through operation unit 4 the coordinate (view point) in the rectangle representing the image to be displayed on the display screen of LCD display 7. By this specification, the coordinate is applied to the apparatus. When the image in the proximity of the view point is a still picture, a reduced picture of a still picture is provided on LCD display 7. When the image in the proximity of the view point is a motion picture, a reduced image is frame-forwarded on LCD display 7 to provide a display of a motion picture.

When a view point is input in the present embodiment, reduced image data file 33 is accessed to reproduce and display a reduced image. However, implementation of the present invention is not limited to this. For example, in response to an input of a view point, original image data file 34 can be accessed to reproduce an original image. In the present embodiment, it is desirable to output a reduced image since reduced image data file 33 is located adjacent to time stamp DB file 32 to allow a faster output.

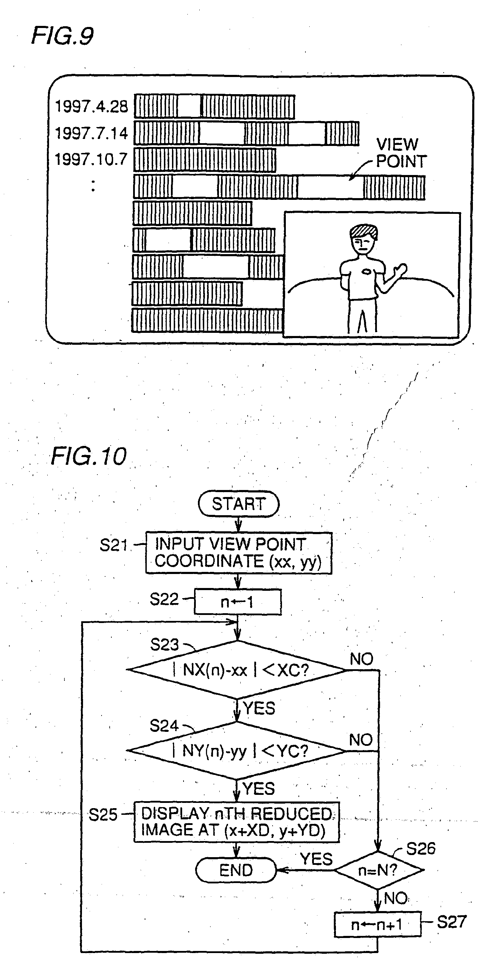

The control structure of the program that realizes the display operation of Fig. 9 will be described hereinafter according to the flow chart of Fig. 10. In the flow chart of Fig. 10, XC and YC are constants that become the threshold values to determine the closeness between a view point and an image. XD and YD are constants representing the offset between the image catalog display position and the position where the reduced image of a specified image is displayed.

At step S21, the user inputs an arbitrary coordinate (xx, yy) through operation unit 4 as the coordinate of the view point. The user does not actually input the coordinate itself. The user specifies a certain point on the displayed screen of LCD display 7 using a pointer. The coordinate of the specified point is applied to the program (CPU 1). In response to this input, CPU 1 initialize the time stamp number n to 1 at step S22.

At step S23, comparison is carried out whether the x coordinate NX(n) of the n-th graphic recorded at steps S7 and S10 of Fig. 8 is in the proximity of the x coordinate xx of the view point input at step S21. More specifically, the absolute value |NX(n)-xx| of NX(n)-xx is calculated. Determination is made whether this absolute value is smaller than a predetermined upper limit value XC. When |NX(n)-xx| <XC, the control proceeds to step S24. When |NX(n)-xx | ≧XC, control proceeds to step S26.

At step S24, a similar process is carried out for the y coordinate. More specifically, the absolute value |NY(n)-yy| of NY(n)-yy is calculated. Determination is made whether this absolute value is smaller than a predetermined upper limit value YC. When |NY(n)-yy|<YC, control proceeds to step S25. When |NY(n)-yy|≧YC, control proceeds to step S26.

When determination is made that the view point (xx, yy) is close to the display coordinate of the n-th graphic, control proceeds to step S25. At step S25, CPU 1 displays the n-th reduced image at the coordinate (x+XD, y+YD) on LCD display 7. Then, the display process ends.

When the determination result is NO at either of step S23 or S24, comparison is made whether the time stamp number n is equal to the total number of time stamps N at step S26. When n=N, the process ends. When n=N, control proceeds to step S27 to add 1 to n to obtain the next time stamp number n+1. Control then returns to step S23 to repeat the above-described process for the (n+1)th graphic.

In the present embodiment, comparison between the coordinates of the view point and the "number of pictures representing graphic" is initiated from the first time stamp number n and until the condition is satisfied or until the comparison with the coordinates of all the graphics is completed. However, the present invention is not limited to this. For example, comparison can be initiated from a certain number greater than 1. Also, the comparison process can be terminated when n matches a value smaller than N. Alternatively, both of these events can be employed.

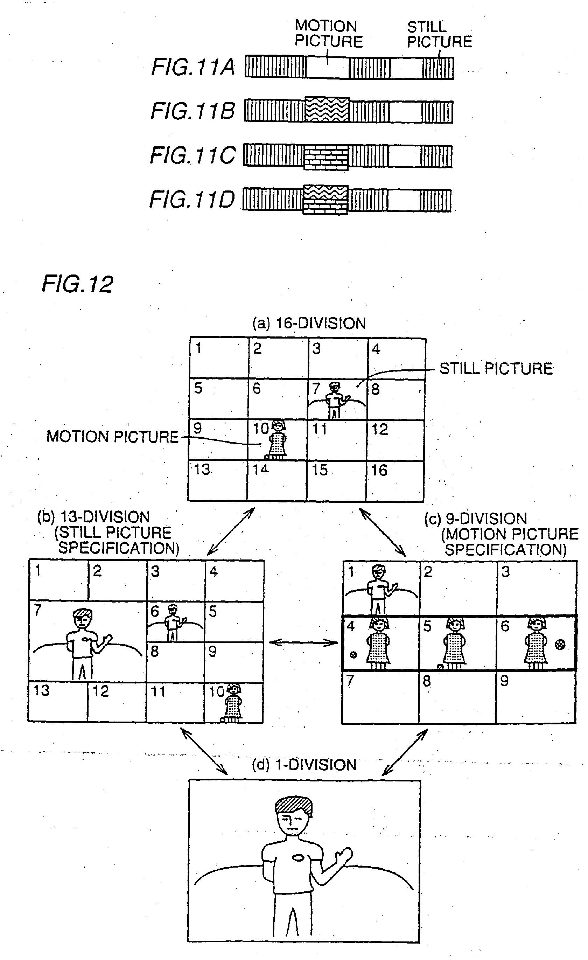

Figs. 11A-11D show a catalog display format of image data differing from that of Fig. 6, according to the presence/absence of voice data or text data. Fig. 11A indicates that neither voice data nor text data is added to any of the motion and still pictures. Fig. 11B indicates that only voice data, not text data, is added to the left side motion picture. Fig. 11C shows that only text data, not voice data, is added to the left side motion picture. Fig. 11D shows that both text data and voice data are applied to the left side motion picture. Such difference in the display format can be effected as a result of CPU 1 determining the contents of file name 41 and voice data number 43 in time stamp DB file 32. By differentiating the display format of image data when voice data, or text data, or both thereof, are applied to the image data, image data can be classified from the standpoint of more aspects to facilitate display and retrieval at a glance.

The above embodiment was described in which the present invention is applied to an electronic camera that can carry out recording and reproduction. The invention of the present application can also be implemented as a display device or a retrieval device that carries out the above-described image display and retrieval using a computer apparatus. Furthermore, an apparatus according to the present invention can be implemented by storing a program that executes the above-descizbed display and retrieval function in a recording medium such as a floppy disk or a CD-ROM (Compact Disk), which is appropriately installed into a computer.

Thus, according to the image processing apparatus of the present embodiment, the contents of the recording medium can be identified at a glance since the number of pictures representing graphic can be displayed according to the length corresponding to the number of shot still pictures and motion pictures and in different display manners on the basis of a predetermined shooting time. Furthermore, a corresponding image can be displayed when the user wishes to view in further detail by just specifying an arbitrary coordinate on the screen.

### Second Embodiment

An image processing apparatus according to a second embodiment of the present invention will be described hereinafter. The image processing apparatus of the second embodiment is characterized in that the divided number of a screen for displaying a catalog of images is variable. Also, discrimination between a still picture and a motion picture is effected by displaying a motion picture in a reduced form and in a frame-forwarding manner in divisional display. Furthermore, the second embodiment is characterized in that, when any of a divided-displayed image is selected, the subsequent select operation can be differentiated between a still picture and a motion picture for a non-selected image.

The structure of the image processing apparatus of the second embodiment is similar to that of the first embodiment shown in Fig. 1. The label, reference character, and function of respective components are also similar to those of the first embodiment provided that the function of the program executed by CPU 1 differs. Therefore, details of the same will not be repeated.

The overall operation of the image divisional display on LCD display 7 of the present invention will be described hereinafter with reference to Fig. 12.

When a retrieval mode is set by a command through operation unit 4, CPU 1 accesses disk 9 with the optical head of disk drive 8. A reduced image of a predetermined image is read out from the stored contents in disk 9. The screen is divided into 16 regions to display sixteen images in the first to sixteenth display regions on LCD display 7 in a manner shown in Fig. 12 (a). Here, a still picture is displayed as one still image. A motion picture is displayed as an image of time series where an image is replaced with the next image at a constant time interval. The user can identify whether a relevant image corresponds to a still picture or a motion picture by the replacement of an image. Alternatively, discrimination between a still picture and a motion picture can be effected by displaying an image in a negative-positive reversal manner, or displaying different marks such as a triangle or a rectangle at a poition of the region of each image depending upon a still picture or a motion picture.

The user inputs a view point on the display screen through operation unit 4 with respect to the displayed state of Fig. 12 (a). By this selection, either a still picture or a motion picture is selected. The coordinate of the input viewpoint is sent to CPU 1. CPU 1 modifies the display manner such as the number of divided regions according to the type of the image corresponding to the input coordinate as set forth in the following to emphasize the reduced image of the input view point.

More specifically, when the specified image is a still picture, the display region on LCD display 7 is divided into a total of thirteen regions as shown in Fig. 12 (b), i.e., into the first to sixth and eighth to thirteenth divided regions, each having a size identical to that of each divided region of Fig. 12 (a), and the seventh divided region of a size four times that of each divided region of Fig. 12 (a). A reduced image similar to that of Fig. 12 (a) is displayed in respective areas of the first to sixth and eighth to thirteenth divided regions. In the seventh region, a reduced image of the original image corresponding to the seventh region selected at Fig. 12 (a) is displayed having a size four times that of other reduced images.

When the specified image is a motion picture, the display region is divided into 9 regions as shown in Fig. 12 (c). A series of reduced images about and preceding/succeeding in the time axis the reduced image of the specified motion picture of Fig. 12 (a) are displayed in the fourth to sixth display regions in a frame-forwarding manner. Here, the image displayed in respective fourth to sixth display regions correspond to scenes differing from each other of the relevant data. The image of the motion picture does not have to be frame-forwarded in such a manner. A plurality of continuous still images can be displayed.

Upon specification of a still picture or a motion picture, the number of divided areas of the screen vary. Therefore, the search for an image of interest can be effected more easily. Furthermore, since the dividing manner of the screen differs according to the type of specified image, the type of the specified image can be identified at a glance.

When the user specifies a view point in the seventh display region through operation unit 4 with respect to the display state of Fig. 12 (b), CPU 1 accesses disk 9 with an optical head not shown of disk drive 8. An original image of the still picture displayed in the seventh display region is selected. This original image is reproduced and displayed over the entire display region of LCD display 7 as shown in Fig. 12 (d). Here, the magnification scale of the displayed image can be adjusted so as to fit the display region of LCD display 7 according to the size of the original image. Alternatively, a display can be provided without adjusting the size. Further alternatively, the displayed size can be adjusted subsequently by the user.

Although not shown, similar to Fig. 12 (d), a series of original images including a specified motion picture can be displayed at the display region of LCD display 7 by specifying a view point through operation panel 4 in any one of the fourth to sixth display regions under the displayed state of Fig. 12 (c).

In the displayed state of Fig. 12 (b), it is assumed that the image displayed in the tenth region of Fig. 12 (a) is identically displayed in the same tenth region. By specifying a view point within the tenth display region through operation panel 4, the display mode is switched to that of Fig. 12 (c). Conversely, when the still picture of the seventh region in Fig. 12 (a) is displayed in the first region in the displayed state of Fig. 12 (c), specification of a view point within the first region through operation panel 4 switches the display mode to that of Fig. 12 (b).

In the present embodiment, the position and area of the entire display region of Fig. 12 (a) does not change for the sake of facilitating retrieval even when the screen division of Fig. 12 (b) - (d) is effected. The present invention is not limited to this, and the position, the area, or both of the entire display region can be altered in Fig. 12 (a) - (d).

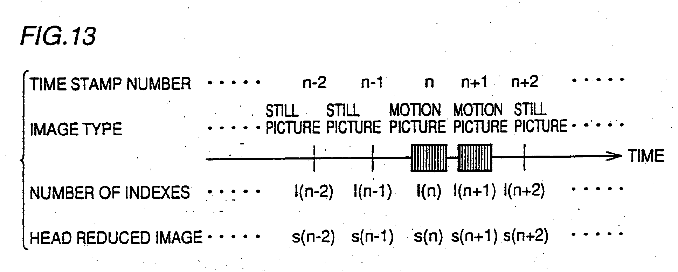

Fig. 13 schematically shows the corresponding relationship between time stamp information and a reduced image of motion and still pictures to realize the display of Fig. 12 according to the second embodiment. Referring to Fig. 13, if the time stamp number is set to n (n=1, 2, ..., n-2, n-1, n, n+1, n+2, ..., N), reduced images S(n) (n=1, 2, ..., n-2, n-1, n, n+1, n+2, ..., N) are present with respect to each time stamp number n. In the event of a still picture, reduced image S(n) is that one still image. In the event of a motion picture, reduced image S(n) is the head image of the motion picture.

Each image has the corresponding number of indexes I(n) indicating the number of reduced images for a motion picture or a still picture. The number of indexes I(n) is 1 for a still picture and a number of 2 and above for a motion picture (the number of pictures constituting the reduced images for that motion picture) in the present embodiment.

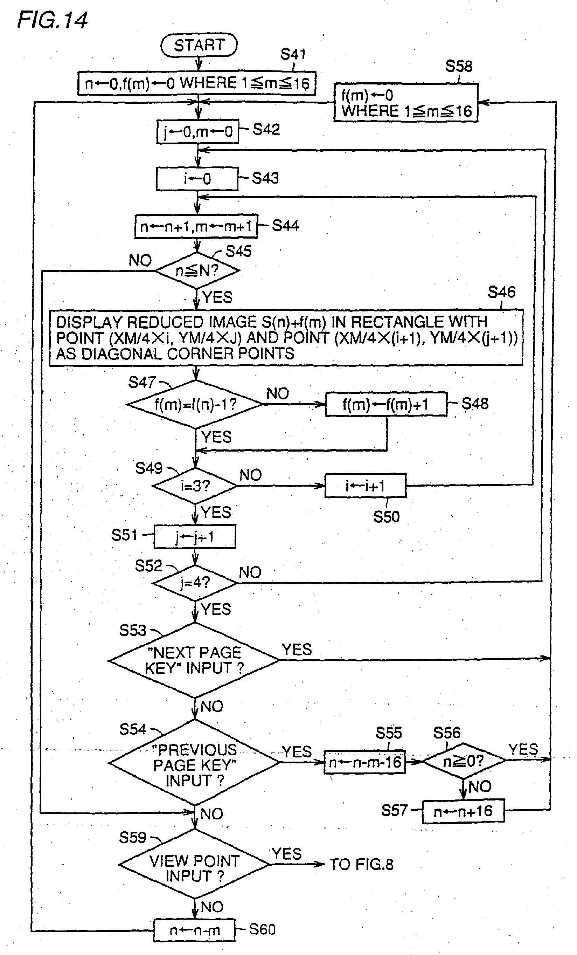

The above divisional display operation will be described hereinafter with reference to Figs. 14-17.

First, a 16-division display operation of Fig. 12 (a) will be described in detail with reference to the flow chart of Fig. 14.

At step S41, CPU 1 initializes the time stamp number n to 0 and the variable f(m) for frame-forwarding to 0. Here, m represents the region number in which a reduced image is displayed. Frame-forwarding variable f(m) represents the index number of a reduced image to be displayed in the m-th region out of a series of reduced images of a certain image. "f(m)" is a seyal number starting from 0. In the present embodiment, the maximum number of images displayed in a divisional form is 16. Therefore, m is at least 1 and not more than 16.

At step S42, 0 is input to variable j specifying a display region in the y axis direction, and to display region number m. At step S43, variable i specifying the display region in the x axis direction is set to 0.

At step S44, 1 is added to respective values of time stamp number n and display region number m. At step S45, determination is made whether the time stamp number n is less than the total number of time stamps N. When n>N, control jumps to step S59. When n≧N, control proceeds to step S46 to display reduced image S(n)+f(m) in a rectangle with point (XM/4×i, YM/4×j) and point (XM/4×(i+1), YM/4×(j+1)) as the left top corner point and right bottom corner point, respectively, on a screen having the coordinate of the left top point as the origin. Here, reduced image S(n)+f(m) refers to the f(m)th reduced image ((f(m)=0 is the head) of the image of the n-th time stamp.

At step S47, CPU 1 determines whether the value of the current f(m) (i.e., the number of the reduced image that is of interest of the current display) is equal to the number of the number of indexes I(n) minus 1 to check whether there is a reduced image to be subsequently displayed. The reason why 1 is subtracted from the number of indexes I(n) is that I(n) starts from 1 whereas f(m) starts from 0.

When f(m) = I(n)-1, control proceeds to step S49. When f(m) ≠ I(n)-1, control proceeds to step S48 and then to step S49. By adding 1 to f(m) at step S48, the reduced image to be displayed next is set as to be subsequent to the currently-displayed reduced image.

At step S49, CPU 1 determines whether variable i specifying the display region in the x axis direction is equal to 3 or not. Since i starts from 0, i=3 implies that the display region has reached the fourth region from the left, i.e. the right-most region. Therefore, determination is made whether the display region has arrived at the right side in step S49.

When i≠3, control proceeds to step S50 to add 1 to i. The display region advances rightwards. Then, control returns to step S44 again to repeat the above-described process until i=3.

When i=3, control proceeds to step S51 where 1 is added to valiable j specifying the display region in the y axis direction in the screen. The four display regions in the y axis direction correspond to j=0~3, respectively. By the process of step S51, the region to be displayed next advances one row in the y direction. At step S52, 'determination is made whether j is 4 or not. The process of displaying a reduced image in all the sixteen divided regions of this page is not completed until j=4. Therefore, control returns to step S43 to repeat the above process when j is not 4.

When j=4, control proceeds to step S53 to check whether there is input of a "next page key" through operation unit 4. When determination is made of a "next page key" input during steps S42 to S53, control proceeds to step S58. At step S58, f(m) in initialized to 0 to display the next page. Control then proceeds to step S42 to repeat the above-described process.

When determination is made that the "next page key" is not input at step S53, control proceeds to step S54 to determine whether a "previous page key" is input through operation unit 4. When the "previous page key" is input, control proceeds to step S55 to return the time stamp number n to the beginning of the previous page. More specifically, the display region number m is subtracted from time stamp number n to be set as the first time stamp number in the current page. Then, 16 is subtracted to obtain the head time stamp number of the previous page. The result is set as the new value of n.

At step S56, determination is made whether the current time stamp number n is at least 0. When n is 0 or greater, control proceeds to step S58. When n is not at least 0, determination is made that there is no reduced image to be displayed in a previous page. Therefore, control proceeds to step S57 where CPU 1 updates the time stamp number back to the time stamp number of the current page. At step S58, variable f(n) is updated to 0. Then, control returns to step S42 to repeat the above-described process.

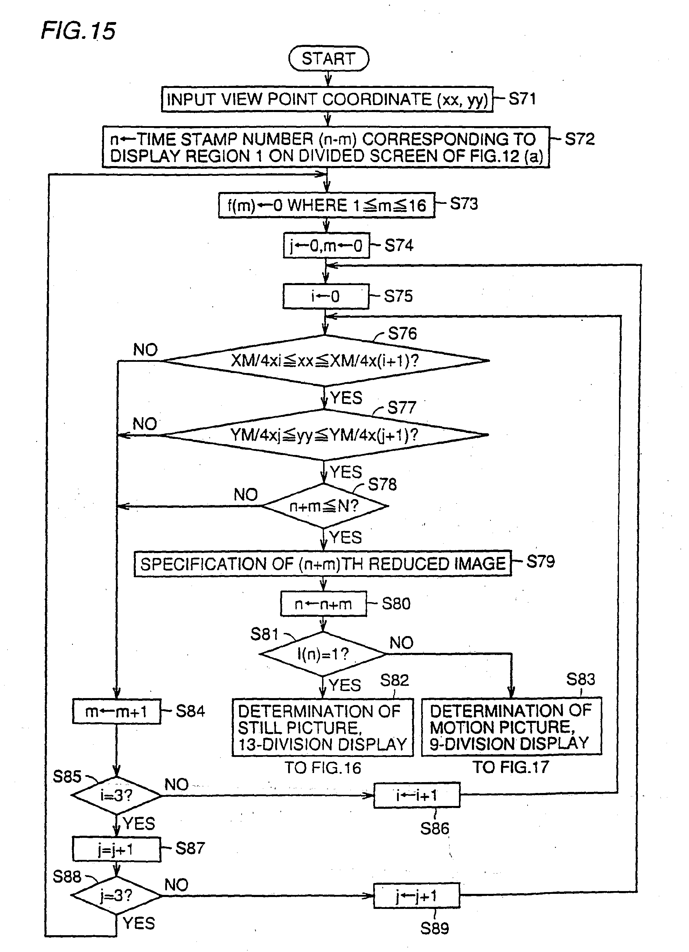

When determination is made that the "previous page key" is not input at step S54, control proceeds to step S59 to check whether a view point is input by the user. When the user has input a view point, control proceeds to step S71 of Fig. 15. When a view point is not input, control proceeds to step S60. At step S60, the time stamp number n is updated to the time stamp number n-m of the left top line in the screen. Then, control returns to step S42 to repeat the above process. Display of a reduced image is maintained by such repetition.

The flow of determination starting from input of a coordinate on the screen through input of a view point from operation unit 4 until a reduced image corresponding to the coordinate of the view point is displayed will be described hereinafter with reference to the flow chart of Fig. 15. This process is executed when determination is made that a view point is input at step S59 of Fig. 14.

At step S71, the user enters a view point coordinate (xx, yy) from operation unit 4. More specifically, the user specifies a portion of an image of interest with a pointer such as a mouse. The coordinate of the specified point is sent to CPU 1. In response, control proceeds to step S72 where CPU 1 updates the time stamp number n to the time stamp number (n-m) corresponding to display region 1 on the divided screen of Fig. 12 (a). At step S73, variable f(m) is set to 0. At step S74, vaizable j is set to 0 and display region number m is set to 0. At step S75, variable i is set to 0. The display region (the i-th region in the x axis direction and j-th region in the y axis direction) in which point (xx, yy) is present is obtained at steps S75-S89 while varying the value of i from 0 to 3 for each value of j of 0 to 3.

More specifically, at step S76, CPU 1 determines whether the x coordinate xx of the input view point satisfies XM/4×i≦xx≦XM/4 × (i+1). When this condition is not satisfied, control proceeds to step S84. When the condition is satisfied, control proceeds to step S77.

At step S77, determination is made whether the y coordinate yy of the input view point satisfies YM/4×j ≦yy≦YM/4 × (i+1). When this condition is not satisfied, control proceeds to step S84. When this condition is satisfied, control proceeds to step S78.

At step S78, determination is made whether n+m is equal to or less than N. If this condition is not satisfied, control proceeds to step S84, otherwise to step 579. At step S79, determination is made that the (n+m)th image is specified.

By the above steps of S76, S77 and S78, CPU 1 determines in which display region the input view point coordinate (xx, yy) resides to identify which reduced image is specified.

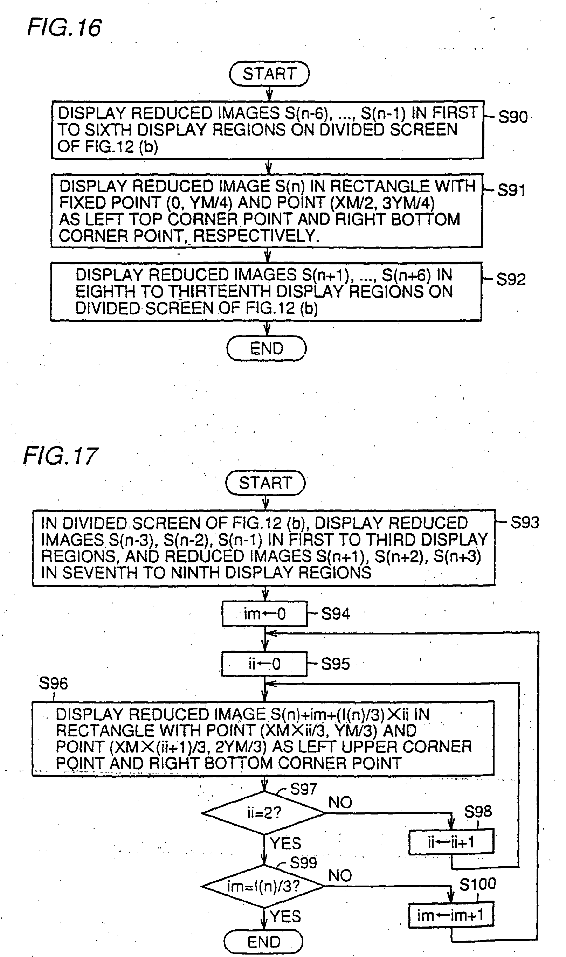

When determination is made that the (n+m)th reduced image is specified at step S79, control proceeds to step S80 where the time stamp number n is updated to n+m. At step S81, determination is made whether the number of indexes I(n) is 1 or not. When I(n)=1, determination is made of a still picture. Control proceeds to the flow chart of Fig. 16 to alter the division number for a 13-division display. When I(n)≠1, determination is made of a motion picture. Control proceeds to the flow chart of Fig. 17 to provide a 9-division display.

When determination is made that a reduced image is not specified at steps S76, S77 and S78, control proceeds to step S84. At step S84, the display region number m is updated to m+1. Then, control proceeds to step S85 to determine whether i is 3 or not. When i=3, control proceeds to step S87. When i≠3 at step S85, i.e., when determination is made that the display region has not arrived at the rightmost column, control proceeds to step S86 where 1 is added to i. Then, control returns to step S76 to repeat the above process.

When determination is made of i=3 at step S85, control proceeds to step S87 to add 1 to j. As a result, the display region of interest advances one row in the y axis direction. At step S88, determination is made whether j=3, i.e., whether the region of interest is at the bottom row. When determination is made that j=3, control returns to step S73 to repeat the above-described process. When j=3 at step S88, control proceeds to step S89 to add 1 to j. Then, control returns to step S75 to repeat the above operation.

When determination is made that the specified reduced image is a still picture at step S82 of Fig. 15, the 13-division display shown in Fig. 12 (b) is provided. Referring to step S90 of Fig. 16, reduced images S(n-6), ..., S(n-1) are displayed in the predetermined first to sixth display regions on the divided screen of Fig. 12 (b). Then, at step S91, reduced image S(n) is displayed in a rectangle with fixed point (0, YM/4) and point (XM/2, 3YM/4) as the left top corner point and light bottom corner point, respectively. At step S92, S(n+1), ..., S(n+6) are provided in the eighth to thirteenth display regions on the divided screen of Fig. 12 (b).

When determination is made that the specified reduced image is a motion picture at step S82 of Fig. 15, the 9-division display of Fig. 12 (c) is provided. At step S93 of Fig. 17, a series of reduced images preceding and succeeding the reduced image specified by the user are displayed in respective predetermined display regions. More specifically, as shown in Fig. 12 (c), reduced images S(n-3), S(n-2), S(n-1) are displayed in the first to third display regions, and reduced images S(n+1), S(n+2), S(n+3) are displayed in the seventh to ninth display regions.

The process of steps S94 and et seq. is the process of displaying each scene of a motion picture in the fourth to sixth display regions. In the following process, the number of a reduced image (scene) displayed in the fourth to sixth display regions is represented by vaizable im. Also, a variable ii for specifying the fourth to sixth display regions is used. Variable im takes a value of 0 to I(n)/3 as displaying separate scenes of a motion picture in three display regions. Variable ii taking the value of 0, 1, and 2 represent the fourth to sixth display regions, respectively. In other words, variable ii represents the display region number in the x axis direction.

At step S94, CPU 1 initializes vaizable im to 0. At step S95, vaizable ii is initialized to 0.

At step S96, CPU 1 displays in a display region specified by variable ii a certain reduced image that is determined by the functions of variables im and ii out of a stream of a plurality of reduced images which are the stream of reduced images corresponding to the scene of a motion picture equally divided in the time axis direction. More specifically, CPU 1 displays a reduced image S(n)+im+(I(n)/3) × ii in a rectangle with point (XM × ii/3, YM/3) and point (XM(ii+1)/3×, 2YM/3) as the left top corner point and right bottom corner point, respectively. At step S97, determination is made whether ii is 3 or not, i.e., whether the display position has arrived at the rightmost site on the screen. When the display position has arrived at the rightmost site on the screen, control proceeds to step S99, otherwise to step S98.

At step S98, 1 is added to ii. Then, control returns to step S96 to repeat the above-described process for the next display region.

When the display position has arrived at the rightmost region in the screen, a reduced picture of each scene has been displayed once in respective fourth to sixth display regions. Then, at step S99, determination is made whether variable im is equal to 1/3 the number of indexes I(n) of this motion picture. When im=I(n)/3, the process ends since the display of the portion allocated to each display region of the specified motion picture is completed. Otherwise, control proceeds to step S100 where 1 is added to vaizable im to display the next reduced image. Control returns to step S95 to repeat the above process for the next scene.

Thus, different scenes of a specified motion picture is displayed as a motion picture of a reduced image in three display regions.

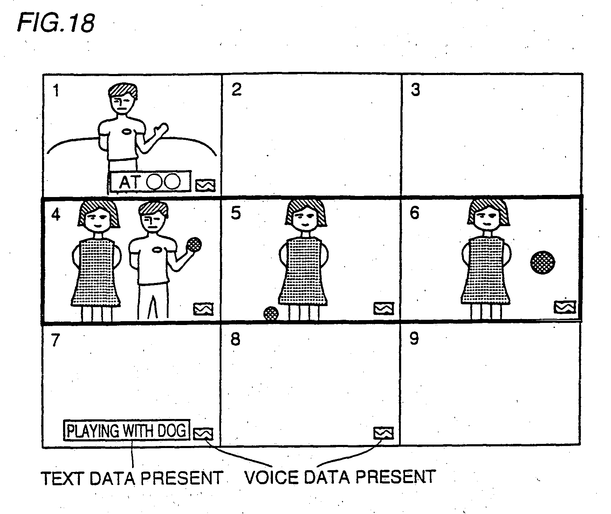

Fig. 18 shows another display manner of Fig. 12 (c) corresponding to presence/absence of voice data or text data. Such a display manner can be realized by having CPU 1 determine the presence of file name 41 and voice data number 43 in time stamp DB file 32 to add predetermined information to the display. By displaying additional information to the catalog display screen, retrieval and display of a desired image from a great amount of images can be carried out easily at a glance.

In the catalog display screen of Fig: 18, CPU 1 checks the time stamp information of a still picture and a motion picture. When corresponding text data is present, the contents of file name 41 is displayed at a predetermined position in the display region. When there is corresponding voice data, a graphic implying voice data (a rectangle graphic with a wave pattern in the present embodiment) is displayed at a predetermined position in the display region.

When voice data is not added to the image, CPU 1 does not provide the graphic display indicating the addition of voice. When there is no file name of the time stamp information in the image, CPU 1 does not provide text display. The display mark depending upon the presence of voice data or text data is not limited to the above embodiment. Any indication that enables discrimination between presence of voice data/text data is allowed. Furthermore, the image processing apparatus can be implemented so that a mark indicating voice data or text data, or both, as in Fig. 18, is displayed in (a) and (b) and (d) of Fig. 12.

The above embodiment was descizbed in which the present invention is applied to an electronic camera that can carry out recording and reproduction of an image. However, the present invention can be generally applied to an apparatus that stores an image. For example, the above-described display and retrieval can be implemented as a display device of an image from a group of stored images or as an image retrieval apparatus using a computer. Furthermore, the present invention can be implemented as a program for reconfiguring a computer as the image processing apparatus. By recording this program in a recording medium such as a floppy disk or a CDROM and appropriately installing the same in a computer, an image processing apparatus or method of the present invention can be realized.

According to the image processing apparatus of the present invention, the display manner of a divisional image is altered according to the type of image to be retrieved. Therefore, the contents of a recording medium can be identified at a glance to allow the user to easily retrieve a desired image.

Although the present invention has been described and illustrated in detail, it is clearly understood that the same is by way of illustration and example only and is not to be taken by way of limitation, the scope of the present invention being limited only by the terms of the appended claims.

## Claims

1. An image processing apparatus for displaying image data including a mixture of a motion picture and a still picture recorded in a recording medium (9, 10), said image processing apparatus comprising:
a display device (7),
a pointer device (4) for specifying an arbitrary point at a display plane on said display device (7), and
division display means (1) for dividing a screen of said display device (7) in a first manner to display a catalog of a plurality of images, and responsive to specification by said pointer device (4) of any of a displayed motion picture or still picture for altering the display manner of the divided screen according to the type of the specified image to a second manner to further display a catalog of a plurality of images.

2. The image processing apparatus according to claim 1, wherein said second manner differs from said first manner in at least one of the divided number of the screen of said display device (7), size of a divided display region, and a display position of a divided image.

3. The image processing apparatus according to claim 2,
wherein said second manner includes a display manner for a motion picture and a display manner for a still picture selected according to the type of a specified image, and
wherein said division display means (1) responds to specification by said pointer device (4) of a divided display region where a still picture is displayed when a catalog of images is displayed in said motion picture display manner to switch to said still picture display manner for displaying a catalog of a plurality of images, and responds to specification by said pointer device (4) of a divided display region where a motion picture is displayed when a catalog of images is displayed in said still picture display manner to switch to said motion picture display manner for displaying a catalog of a plurality of images.

4. The image processing apparatus according to claim 3, further comprising motion picture reproduction means (1, 7) responsive to specification by said pointer device (4) of a divided display region where a motion picture is displayed when a catalog of images is displayed in said motion picture display manner for reproducing and displaying said specified motion picture.

5. The image processing apparatus according to claim 4, further comprising still picture reproduction means (1, 7) responsive to specification by said pointer device (4) of a divided display region where a still picture is displayed when a catalog of images is displayed in said still picture display manner for reproducing and displaying said specified still picture.

6. The image processing apparatus according to claim 1, further comprising motion picture reproduction means (1) responsive to specification of a motion picture by said pointer device (4) for reproducing and displaying a series of motion pictures corresponding to said specified motion picture.

7. The image processing apparatus according to claim 1, wherein any of said image data have additional information, and wherein said division display means (1) differentiates the display manner in said divisional display between image data having said additional information and image data that does not have said additional information.

8. The image processing apparatus according to claim 7, wherein said divisional display means (1) displays a mark according to presence/absence of said additional information for each divided screen.
